# EUROPEAN PATENT SPECIFICATION

(11) **EP 2 424 031 B1**
(45) Date of publication and mention of the grant of the patent: **25.11.2015**
(21) Application number: 11178671.1
(22) Date of filing: 24.08.2011
(51) Int. Cl.: H01M 10/42, H01M 2/16

(54) **Electrode assembly, secondary battery including the same, and method of manufacturing the same**
Elektrodenanordnung, Sekundärbatterie damit und Herstellungsverfahren dafür
Ensemble formant électrode, batterie secondaire l'incluant et son procédé de fabrication correspondant

(30) Priority: 25.08.2010 KR 20100082404
(43) Date of publication of application: 29.02.2012
(73) Proprietor: Samsung SDI Co., Ltd., Yongin-si, Gyeonggi-do (KR)
(72) Inventor: Lee, Hyoung-No, Gyeonggi-do (KR)
(74) Representative: Mounteney, Simon James

(56) References cited:
- WO-A1-2009/008160
- JP-A- 2010 009 818
- US-A1- 2003 224 242
- US-A1- 2007 122 715
- US-A1- 2010 173 205

## Description

### BACKGROUND

### 1. Field

The invention relates to an electrode assembly and a secondary battery including the same.

### 2. Description of Related Art

A secondary battery is provided for use by winding an electrode assembly, accommodating the electrode assembly in a case, injecting an electrolyte into the case, and sealing the case, the electrode assembly being formed by applying an active material to each of a positive current collector and a negative current collector and inserting a separator therebetween.

The separator may be formed of polyethylene (PE) or polypropylene (PP)-based porous materials to prevent a short circuit by direct contact between a positive electrode and a negative electrode. However, when a short circuit occurs due to internal foreign substances or external impact, the porous structure of the separator may be fractured or melted due to a low thermal stability of the porous materials, potentially causing the separator to stop functioning properly.

Further, occurrence of a short circuit or explosion of a battery may be caused by burrs which are inevitably formed on cut surfaces of a positive plate and a negative plate, and thus solutions to safety issues are desirable.

US 2003/0224242 A1 discloses a secondary battery comprising positive and negative electrode plates wound with the separator interposed there between to form an electrode plate assembly, wherein the electrode plate assembly is configured such that each lengthwise edge of the positive electrode current collector is positioned on an outer side of each lengthwise edge of the negative electrode active material part.

US 2007/0122715 A1 discloses a secondary battery comprising a separator and a porous electron-insulating layer and a binder both interposed between positive and negative electrodes, wherein the insulating layer is carried on a region including surfaces of the positive electrode current collecting portion and material mixture layer.

### SUMMARY

The present invention sets out to provide an electrode assembly which relieves occurrence of burrs on a cut surface of the electrode assembly and supplements a low thermal stability of a separator.

The features according to an aspect of the present invention are set out in claim 1. Preferred features are set out in claims 2 to 8.

Further, a method of manufacturing a secondary battery according to another aspect of the present invention is set out in claim 9. Preferred features of the method of manufacturing are set out in claims 10 to 12.

As described above, according to embodiments of the present invention, there is provided a secondary battery which relieves occurrence of burrs on a cut surface of the electrode assembly and supplements a low thermal stability of a separator and a method of manufacturing the same. Moreover, the likelihood of a short circuit and explosion of a battery is significantly reduced to improve reliability of a product. In addition, the likelihood of a defective battery being manufactured is minimized, thereby reducing manufacturing costs.

At least some of the above and other features of the invention are set out in the Claims.

### BRIEF DESCRIPTION OF THE DRAWINGS

The accompanying drawings, together with the description, illustrate exemplary embodiments of the present invention, and serve to explain the principles of the present invention.
FIG. 1 is a perspective view illustrating an electrode assembly of a secondary battery according to an embodiment of the present invention;
FIG. 2A is a cross-sectional view schematically illustrating a positive plate of the secondary battery according to Fig. 1;
FIG. 2B is a perspective view schematically illustrating the positive plate of the secondary battery according to Fig. 1;
FIG. 3A is a cross-sectional view schematically illustrating a positive plate of a secondary battery according to another embodiment of the present invention;
FIG. 3B is a perspective view schematically illustrating the positive plate of the secondary battery according to Fig. 2;
FIG. 4A is a cross-sectional view schematically illustrating a negative plate of a secondary battery according to an embodiment of the present invention;
FIG. 4B is a perspective view schematically illustrating the negative plate of FIG. 4A;
FIG. 5A is a cross-sectional view schematically illustrating a negative plate of a secondary battery according to another embodiment of the present invention;
FIG. 5B is a perspective view schematically illustrating the negative plate of FIG. 5B;
FIG. 6 schematically illustrates a roll coating device according to an embodiment of the present invention;
FIG. 7 schematically illustrates a roll coating device according to another embodiment of the present invention; and
FIG. 8 schematically illustrates a roll coating device according to still another embodiment of the present invention.

### DETAILED DESCRIPTION

In the following detailed description, only certain embodiments of the present invention have been shown and described, simply by way of illustration. Accordingly, the drawings and description are to be regarded as illustrative in nature and not restrictive. In addition, when an element is referred to as being "on" another element, it can be directly on the other element or be indirectly on the other element with one or more intervening elements interposed therebetween. Also, when an element is referred to as being "connected to" another element, it can be directly connected to the other element or be indirectly connected to the other element with one or more intervening elements interposed therebetween. Hereinafter, like reference numerals refer to like elements.

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Hereinafter, embodiments of the present invention will be described in detail with reference to the accompanying drawings.

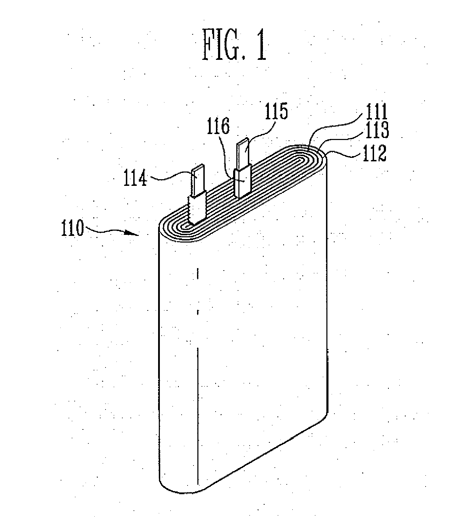

FIGS. 1 to 5B schematically illustrate an electrode assembly, a positive plate or a negative plate according to embodiments of the present invention.

In FIG. 1, the electrode assembly 110 for a secondary battery according to an embodiment of the present invention includes a positive plate 111, a negative plate 112, and a separator 113 located between the two plates 111 and 112. Generally, the positive plate 111 may be a thin plate of aluminum (AI), and the negative plate 112 may be a thin plate of copper (Cu). However, the positive plate 111 and the negative plate 112 are not limited to the above metals. The electrode assembly 110 further includes a positive tab 114 and a negative tab 115, each of which has one end portion protruding from the positive and negative plates 111, 112. In addition, an insulating tape 116 is wound around a portion of the positive tab 194 and the negative tab 115 protruding on the upper part of the electrode assembly 110 to prevent a short circuit between the plates 111 and 112. Generally, the electrode assembly 110 is manufactured by inserting the separator 113 between the positive plate 111 and the negative plate 112 to insulate them from each other and winding the plates and the separator into a jelly roll in order to increase an electric capacity.

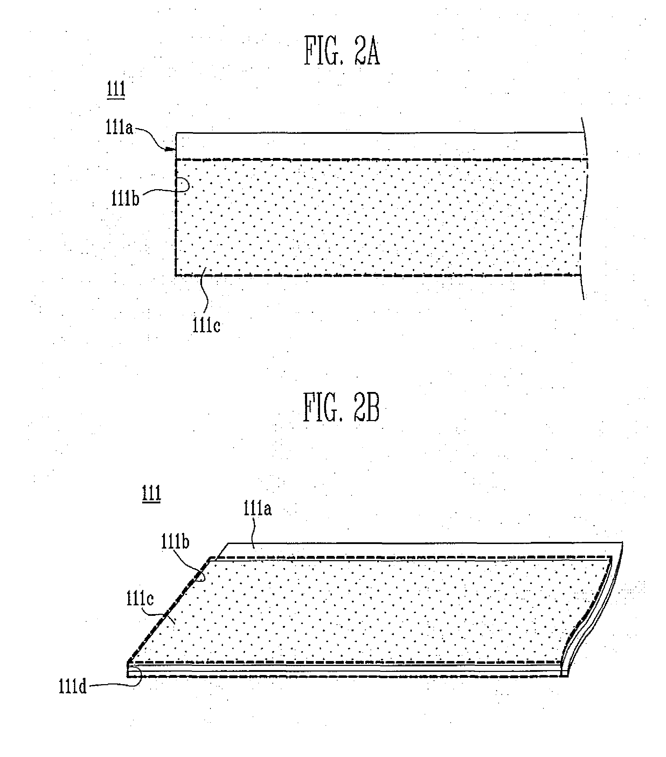

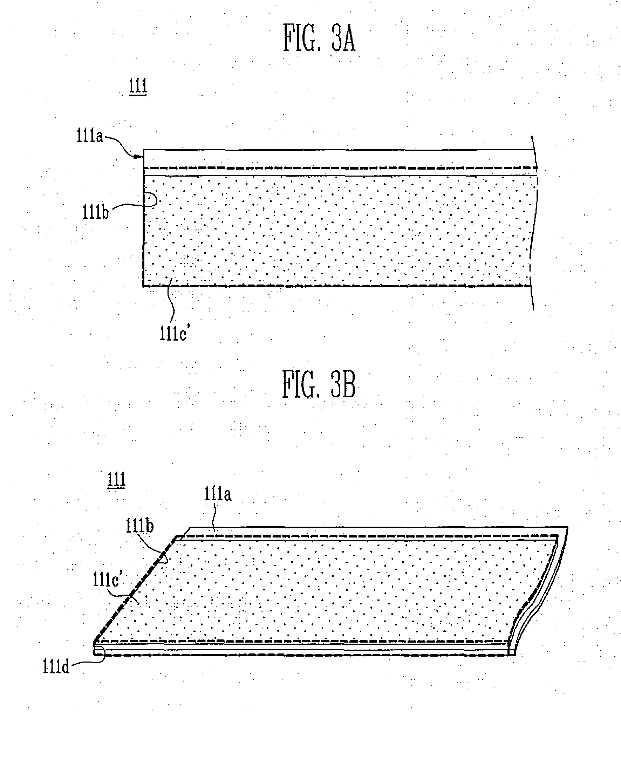

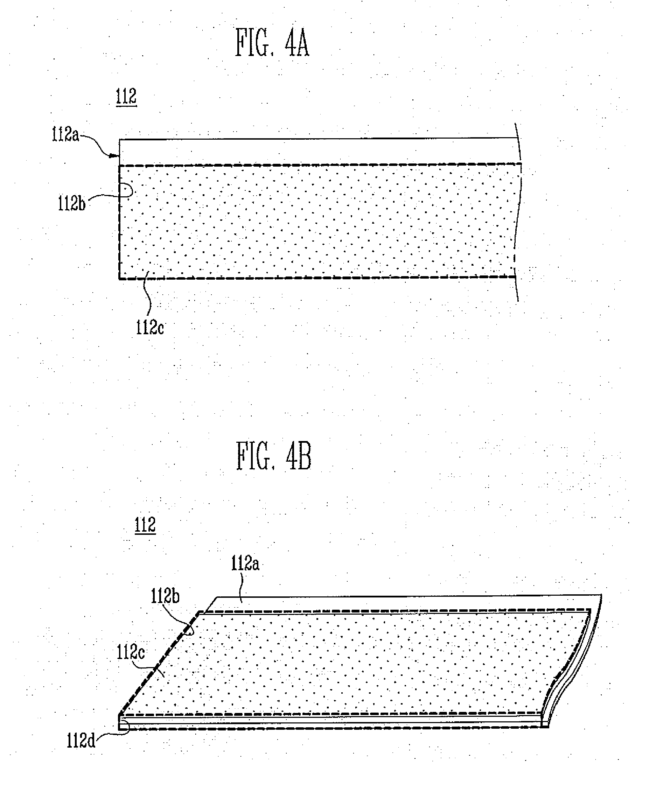

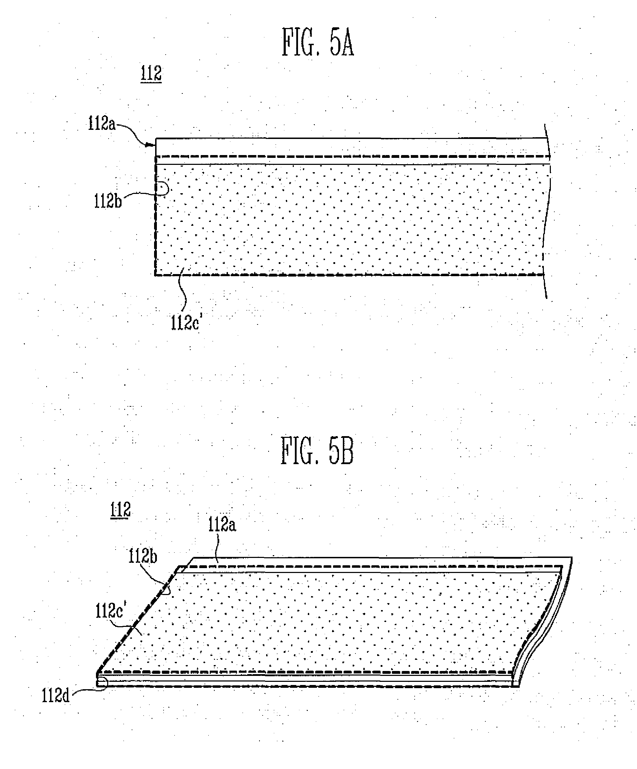

Referring to FIGS. 2A , 2B, 4A, and 4B, a positive active material and a negative active material are applied to one surface of the positive plate 111 and one surface of the negative plate 112, respectively, to form an active part 111 b and 112b. The positive active material may include manganese oxides having a high stability, and the negative active material may include carbon-based compounds. However, the active materials are not limited to the above materials. A non-applied part 111 a and 112a is formed on a portion of the surface to which the positive active material or the negative active material is not applied. In the present embodiment, a part which situated at an edge of the active part 111b or 112b is defined as a "side part". In Figures 2B and 3B, the side part has the designation 111d. In Figures 4B and 5B, the side part has the designation 112d. The side part practically refers to a surface formed by cutting when the positive plate 111 and the negative plate 112 are cut in a lengthwise direction during a manufacturing process. The surface of the side part 111d, 112d is generally transverse to the major surface of the active part 111b, 112b.

According to the present embodiment, the side part 111d, 112d is coated with an inorganic coating layer 111c and 112c. In detail, the inorganic coating layer 111 c and 112c is formed to cover the side part 111d, 112d in the lengthwise direction of the positive plate 111 and the negative plate 112. Further, the inorganic coating layer 111 c and 112c also covers the active part 111 b and 112b. Here, the inorganic coating layer 111 c and 112c may have a thickness of between about 1 µm and about 15 µm.

In this embodiment, the inorganic coating layer 111c and 112c is formed by applying slurry containing inorganic ceramic paste and drying the slurry, wherein the inorganic ceramic paste may include ceramic powder of at least one selected from alumina, zirconia, and an alumina-zirconia mixture. The ceramic powder may be included at about 7% or less of the total weight of the inorganic ceramic paste, and the inorganic ceramic paste may have a viscosity of between about 1 cps and about 500 cps.

Referring to FIGS. 3A, 3B, 5A, and 5B, another embodiment of the present invention is described. An active part 111 b and 112b is formed by applying a positive active material and a negative active material to one surface of a positive plate 111 and one surface of a negative plate 112, respectively. Further, a non-applied part 111a and 112a is formed on a portion of the one surface which the positive active material or the negative active material is not applied to.

In the present embodiment, a side part 111d, 112d is coated with an inorganic coating layer 111c' and 112c'. In detail, the inorganic coating layer 111 c' and 112c' is formed to cover the side part in the lengthwise direction of the positive plate 111 and the negative plate 112. Further, the inorganic coating layer 111c' and 112c' also covers the active part 111 b and 112b. However, unlike the above embodiment, the inorganic coating layer 111c' and 112c' is formed not only to cover an upper side of the active part 111b and 112b but to extend to cover a portion of the non-applied part 111 a and 112a. Here, the inorganic coating layer 111c' and 112c' may have a thickness of between about 1 µm and about 15 µm. When the inorganic coating layer 111c' and 112c' has a thickness of 1 µm or less, thermal stability may not be securely achieved. When the inorganic coating layer 111 c' and 112c' has a thickness of 15 µm or more, thermal stability is excellent, but an ion transfer speed is decreased during charging and discharging. Further, a volume of the inorganic coating layer in a secondary battery 100 increases, and thus a capacity per unit volume may decrease as compared with a secondary battery 100 having the same size.

In this embodiment, the inorganic coating layer 111c' and 112c' is also formed by applying slurry containing inorganic ceramic paste and drying the slurry, wherein the inorganic ceramic paste may include ceramic powder of at least one selected from alumina, zirconia, and an alumina-zirconia mixture. The ceramic powder may be included at about 7% or less of the total weight of the inorganic ceramic paste, and the inorganic ceramic paste may have a viscosity of between about 1 cps and about 500 cps. That is, when the ceramic powder is included at 7% or less of the total weight of the inorganic ceramic paste, and a viscosity of the inorganic ceramic paste is maintained within a range of 1 cps to 500 cps, a target thickness of the inorganic coating layer 111 c' and 112c' may be maintained within a range of 1 µm to 15 µm.

As described above, the inorganic coating layer 111c, 112c, 111c', and 112c' is formed on the active part 111 b and 112b of the positive plate 111 and the negative plate 112, the side part 111d, 112d, and the portion of the non-applied part 111a and 112a, thereby preventing occurrence of a short circuit or explosion of a battery caused by burrs which are inevitably formed on cut surfaces of the positive plate 111 and the negative plate 112. In addition, the separator 113 formed of a porous material which is vulnerable to heat is supplemented to reinforce thermal stability of the battery.

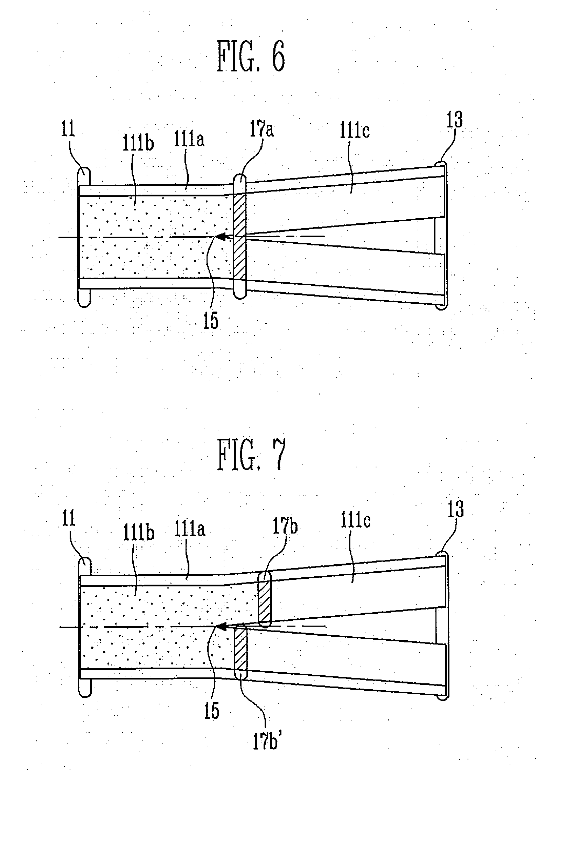

Hereinafter, a process of forming an inorganic coating layer on a positive plate according to an embodiment of the present invention is described schematically with reference to FIGS. 6 to 8.

First, the positive plate 111 including an active part 111 b formed by applying an active material on one surface of the positive plate 111, a non-applied part 111c that is a portion of the surface to which the active material is not applied, and a side part 111d that is a portion of the surface that is generally transverse to the active part 111 b is provided.

As shown in FIG. 6, the positive plate 111 is cut into a desired size using a slitter 15. Then, the inorganic coating layer 111 c is formed on the side part 111d. Here, the inorganic coating layer 111c is formed on the surface of the positive plate 111 and covers the side part 111d in a lengthwise direction of the positive plate 111 as it runs down the side of the positive plate 111. Further, the inorganic coating layer 111c is formed to cover the active part 111 b. A process of forming the inorganic coating layer 111 c may be performed by a roll coating device 17a. The roll coating device 17a may be oriented to cover the positive plate 111 which is not yet cut transversely with respect to a thickness direction of the positive plate 111, and includes inorganic ceramic paste for forming the inorganic coating layer 111c throughout an inside or a lower part. The positive plate 111 is cut into the desired size using the slitter 15, and the inorganic coating layer 111c is formed on the surface of the positive plate 111 using the roll coating device having an un-winder 11 and a re-winder 13. Here, the inorganic coating layer 111 c may be formed by applying slurry containing inorganic ceramic paste and drying. Most of the slurry is applied on the upper surface of the positive plate 111, but some of the slurry runs down the sides of the positive plate 111 and thereby covers the side part 111d.

The above cutting process and the process of forming the inorganic coating layer 111 c may be performed simultaneously or sequentially.

Also, like in the other embodiment, the inorganic coating layer 111 c may be formed to cover a portion of the non-applied part 111a.

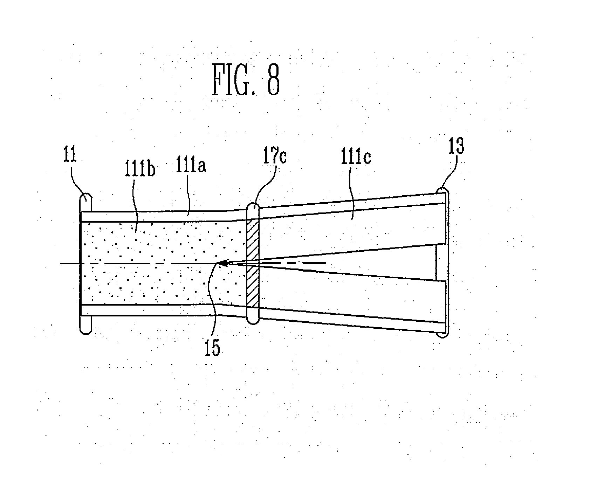

As shown in FIG. 7, a plurality of roll coating devices 17b and 17b' may be provided to freely form the inorganic coating layer 111c. As shown in FIG. 8, inorganic ceramic paste for the inorganic coating layer 111c is put in a portion of one roll coating device 17c, and the device is driven to form the inorganic coating layer 111 c in a desired position.

The electrode assembly 110 may be accommodated in a case, or a plurality of electrode assemblies 110 are accommodated in a single case to form into a high-capacity product. The case may be sealed by a cap assembly.

According to embodiments of the present invention, there is provided a secondary battery which relieves occurrence of burrs on a cut surface of the electrode assembly and supplements a low thermal stability of a separator and a method of manufacturing the same. Moreover, the likelihood of an occurrence of a short circuit and/or explosion of a battery is significantly reduce to improve reliability of a product. In addition, occurrence of a defective battery is minimized in a manufacturing process of a battery to reduce manufacturing costs.

While the present invention has been described in connection with certain embodiments of the invention, it is to be understood that the invention is not limited to the disclosed embodiments, but, on the contrary, is intended to cover various modifications and equivalent arrangements included within the scope of the appended claims.

## Claims

1. An electrode assembly (110) comprising a first plate (111), a second plate (112), and a separator (113) located between the first plate (111) and the second plate (112), each of the first plate (111) and the second plate (112) comprising an active part (111b) formed by applying an active material to at least one surface and a non-applied part (111a) from which the active material is omitted,
wherein a side surface (111d) of the first plate (111) which extends from the active part (111b) and transverse to the active part (111b) of the first plate (111) is coated with an inorganic coating layer (111c), wherein the inorganic coating layer (111c) entirely covers the active part (111b) of the first plate (111) and wherein the non-applied part runs along a lengthwise direction opposite the side of the side surface,
further wherein the inorganic coating layer (111c) has a thickness of from 1 µm to 15 µm.

2. An electrode assembly (110) according to claim 1, wherein the inorganic coating layer (111c) covers a portion of the non-applied part (111 a) of the first plate (111).

3. An electrode assembly (110) according to claim 1 or 2, wherein the inorganic coating layer (111c) comprises a dried inorganic ceramic material.

4. An electrode assembly (110) according to claim 3, wherein the inorganic ceramic material comprises ceramic powder of at least one selected from alumina, zirconia, and an alumina-zirconia mixture.

5. An electrode assembly (110) according to claim 4, wherein the ceramic powder is about 7% or less of a weight of the inorganic ceramic material.

6. An electrode assembly (110) according to claims 3, 4 or 5, wherein the inorganic ceramic material has a pre-dried viscosity of from 1 cps to 500 cps.

7. An electrode assembly (110) according to any preceding claim, wherein a side part (112d) of the second plate (112) which extends from the active part (112b) of the second plate (112) is coated with an inorganic coating layer (112c).

8. A secondary battery (100) comprising:
an electrode assembly (110) according to any preceding claim a first tab (114) and a second tab (115) respectively connected to the first plate (111) and the second plate (112) of the electrode assembly (110); and
a case housing the electrode assembly (110).

9. A method of manufacturing a secondary battery (100) including an electrode assembly (110) having a first plate (111), a second plate (112), and a separator (113) located between the first plate (111) and the second plate (112), the method comprising:
applying an active material to a portion of at least one surface of the first plate (111) to form an active part (111 b) and a non-applied part (111 a) to which the active material is omitted along a lengthwise direction;
cutting the first plate (111) into a desired size to form a side surface extending from the active part and transverse to the active part; and
applying an inorganic coating layer (111c) on the side surface (111d) of the first plate (111) that extends from the active part of the first plate (111),
wherein the inorganic coating layer (111c) is applied to cover the entire active part (111 b) at the same time,
further wherein the inorganic coating layer (111c) has a thickness of from 1 µm to 15 µm.

10. A method according to claim 9, wherein the cutting and the applying the inorganic coating layer (111c) are performed simultaneously.

11. A method according to claim 9, wherein the cutting and the applying the inorganic coating layer (111c) are performed sequentially.

12. A method according to one of claims 9 to 11, wherein the inorganic coating layer (111c) is applied to cover a portion of the non-applied part (111a).

## Patentansprüche

1. Elektrodenanordnung (110), die eine erste Platte (111), eine zweite Platte (112) und einen Separator (113) aufweist, der zwischen der ersten Platte (111) und der zweiten Platte (112) angeordnet ist, wobei eine jede von erster Platte (111) und zweiter Platte (112) einen aktiven Teil (111b), der durch Aufbringen eines aktiven Materials auf mindestens eine Fläche gebildet wird, und einen Teil ohne Aufbringung (111a) aufweist, bei dem das aktive Material weggelassen wird,
wobei eine Seitenfläche (111d) der ersten Platte (111), die sich vom aktiven Teil (111b) und quer zum aktiven Teil (111b) der ersten Platte (111) erstreckt, mit einer anorganischen Beschichtungsschicht (111c) beschichtet wird, wobei die anorganische Beschichtungsschicht (111c) vollständig den aktiven Teil (111b) der ersten Platte (111) bedeckt, und wobei der Teil ohne Aufbringung entlang einer Längsrichtung entgegengesetzt der Seite der Seitenfläche verläuft,
wobei außerdem die anorganische Beschichtungsschicht (111c) eine Dicke von 1 µm bis 15 µm aufweist.

2. Elektrodenanordnung (110) nach Anspruch 1, bei der die anorganische Beschichtungsschicht (111c) einen Abschnitt des Teils ohne Aufbringung (111a) der ersten Platte (111) bedeckt.

3. Elektrodenanordnung (110) nach Anspruch 1 oder 2, bei der die anorganische Beschichtungsschicht (111c) ein getrocknetes, anorganisches, keramisches Material aufweist.

4. Elektrodenanordnung (110) nach Anspruch 3, bei der das anorganische, keramische Material ein Keramikpulver von mindestens einem aufweist, das unter Aluminiumoxid, Zirkoniumoxid und einer Aluminiumoxid-Zirkoniumoxid-Mischung ausgewählt wird.

5. Elektrodenanordnung (110) nach Anspruch 4, bei der das Keramikpulver etwa 7 % oder weniger des Gewichtes des anorganischen, keramischen Materials beträgt.

6. Elektrodenanordnung (110) nach Anspruch 3, 4 oder 5, bei der das anorganische, keramische Material eine vorgetrocknete Viskosität von 1 cps bis 500 cps aufweist.

7. Elektrodenanordnung (110) nach einem der vorhergehenden Ansprüche, bei der ein Seitenteil (112d) der zweiten Platte (112), der sich vom aktiven Teil (112b) der zweiten Platte (112) erstreckt, mit einer anorganischen Beschichtungsschicht (112c) beschichtet ist.

8. Sekundärbatterie (100), die aufweist:
eine Elektrodenanordnung (110) nach einem der vorhergehenden Ansprüche, wobei eine erste Kontaktnase (114) und eine zweite Kontaktnase (115) jeweils mit der ersten Platte (111) und der zweiten Platte (112) der Elektrodenanordnung (110) verbunden sind; und
ein Gehäuse, das die Elektrodenanordnung (110) aufnimmt.

9. Verfahren zur Herstellung einer Sekundärbatterie (100), die eine Elektrodenanordnung (110) mit einer ersten Platte (111), einer zweiten Platte (112) und einem Separator (113) umfasst, der zwischen der ersten Platte (111) und der zweiten Platte (112) angeordnet ist, wobei das Verfahren die folgenden Schritte aufweist:
Aufbringen eines aktiven Materials auf einen Abschnitt von mindestens einer Fläche der ersten Platte (111), um einen aktiven Teil (111b) und einen Teil ohne Aufbringung (111a) zu bilden, bei dem das aktive Material entlang der Längsrichtung weggelassen wird;
Schneiden der ersten Platte (111) auf eine gewünschte Größe, um eine Seitenfläche zu bilden, die sich vom aktiven Teil und quer zum aktiven Teil erstreckt; und
Aufbringen einer anorganischen Beschichtungsschicht (111c) auf die Seitenfläche (111d) der ersten Platte (111), die sich vom aktiven Teil der ersten Platte (111) erstreckt,
wobei die anorganische Beschichtungsschicht (111c) aufgebracht wird, um den gesamten aktiven Teil (111b) gleichzeitig zu bedecken,
wobei außerdem die anorganische Beschichtungsschicht (111c) eine Dicke von 1 µm bis 15 µm aufweist.

10. Verfahren nach Anspruch 9, bei dem die Schritte des Schneidens und Aufbringens der anorganischen Beschichtungsschicht (111c) gleichzeitig durchgeführt werden.

11. Verfahren nach Anspruch 9, bei dem die Schritte des Schneidens und Aufbringens der anorganischen Beschichtungsschicht (111c) aufeinanderfolgend durchgeführt werden.

12. Verfahren nach einem der Ansprüche 9 bis 11, bei dem die anorganische Beschichtungsschicht (111c) aufgebracht wird, um einen Abschnitt des Teils ohne Aufbringung (111a) zu bedecken.

## Revendications

1. Assemblage d'électrode (110), comprenant une première plaque (111), une deuxième plaque (112) et un séparateur agencé entre la première plaque (111) et la deuxième plaque (112), chacune de la première plaque (111) et de la deuxième plaque (112) comprenant une partie active (111b) formée par application d'un matériau actif sur au moins une surface, et une partie non appliquée (111a) de laquelle le matériau actif est omis ;
dans lequel une surface latérale (111d) de la première plaque (111), s'étendant à partir de la partie active (111b) et de manière transversale à la partie active (111b) de la première plaque (111), est revêtue d'une couche de revêtement inorganique (111c), la couche de revêtement inorganique (111c) recouvrant entièrement la partie active (111b) de la première plaque (111), et dans lequel la partie non appliquée s'étend le long d'une direction longitudinale opposée au côté de la surface latérale ;
dans lequel la couche de revêtement inorganique (111c) a en outre une épaisseur comprise entre 1 µm et 15 µm.

2. Assemblage d'électrode (110) selon la revendication 1, dans lequel la couche de revêtement inorganique (111c) recouvre une partie de la partie non appliquée (111a) de la première plaque (111).

3. Assemblage d'électrode (110) selon les revendications 1 ou 2, dans lequel la couche de revêtement inorganique (111c) comprend un matériau céramique inorganique séché.

4. Assemblage d'électrode (110) selon la revendication 3, dans lequel le matériau céramique inorganique comprend de la poudre céramique comprenant au moins un matériau sélectionné parmi l'alumine, le dioxyde de zirconium et un mélange d'alumine-dioxyde de zirconium.

5. Assemblage d'électrode (110) selon la revendication 4, dans lequel la poudre céramique représente environ 7% ou moins d'un poids du matériau céramique inorganique.

6. Assemblage d'électrode (110) selon les revendications 3, 4 ou 5, dans lequel le matériau céramique inorganique présente une viscosité avant séchage comprise entre 1 cps et 500 cps.

7. Assemblage d'électrode (110) selon l'une quelconque des revendications précédentes, dans lequel une partie latérale (112d) de la deuxième plaque (112), s'étendant à partir de la partie active (112b) de la deuxième plaque (112) est revêtue d'une couche de revêtement inorganique (112c).

8. Batterie secondaire (100), comprenant :
un assemblage d'électrode (110) selon l'une quelconque des revendications précédentes, une première languette (114) et une deuxième languette (115) étant connectées respectivement à la première plaque (111) et à la deuxième plaque (112) de l'assemblage d'électrode (110) ; et
un logement recevant l'assemblage d'électrode (110).

9. Procédé de fabrication d'une batterie secondaire (100), englobant un assemblage d'électrode (110) comportant une première plaque (111), une deuxième plaque (112) et un séparateur (113) agencé entre la première plaque (111) et la deuxième plaque (112), le procédé comprenant les étapes ci-dessous :
application d'un matériau actif sur une partie d'au moins une surface de la première plaque (111) pour former une partie active (111b) et une partie non appliquée (111a) de laquelle le matériau actif est omis le long d'une direction longitudinale ;.
découpe de la première plaque (111) en une taille voulue pour former une surface latérale s'étendant à partir de la partie active et de manière transversale à la partie active ; et
application d'une couche de revêtement inorganique (111c) sur la surface latérale (111d) de la première plaque (111) s'étendant à partir de la partie active de la première plaque (111) ;
dans lequel la couche de revêtement inorganique (111c) est appliquée de sorte à recouvrir simultanément l'ensemble de la partie active (111b) ;
dans lequel la couche de revêtement inorganique (111c) a en outre une épaisseur comprise entre 1 µm et 15 µm.

10. Procédé selon la revendication 9, dans lequel les étapes de découpe et d'application de la couche de revêtement inorganique (111c) sont effectuées de manière simultanée.

11. Procédé selon la revendication 9, dans lequel les étapes de découpe et d'application de la couche de revêtement inorganique (111c) sont effectuées de manière séquentielle.

12. Procédé selon l'une des revendications 9 à 11, dans lequel la couche de revêtement inorganique (111c) est appliquée de sorte à recouvrir une partie de la partie non appliquée (111a).
